# EUROPÄISCHE PATENTSCHRIFT

(11) **EP 2 069 179 B1**
(45) Veröffentlichungstag und Bekanntmachung des Hinweises auf die Patenterteilung: **28.12.2011**
(21) Anmeldenummer: 07820292.6
(22) Anmeldetag: 18.09.2007
(51) Int. Cl.: B61B 10/04, B65G 17/00, B65G 19/02

(54) **FRIKTIONSFÖRDERER**
FRICTION CONVEYOR
CONVOYEUR À FRICTION

(30) Priorität: 25.09.2006 DE 102006045575
(43) Veröffentlichungstag der Anmeldung: 17.06.2009
(73) Patentinhaber: Ceratis GmbH, 56307 Dernbach (DE)
(72) Erfinder: KRUPS, Peter, 56584 Anhausen (DE); KRUPS, Matthias, 53639 Vinxel (DE)
(74) Vertreter: von Kreisler Selting Werner
(86) Internationale Anmeldenummer: PCT/EP2007/059829
(87) Internationale Veröffentlichungsnummer: WO 2008/037622

(56) Entgegenhaltungen:
- CH-A5- 669 167
- GB-A- 601 719
- GB-A- 1 263 298
- US-A- 3 824 930
- US-A- 5 368 152

## Beschreibung

Die Erfindung betrifft einen Friktionsförderer, wie einen Rollen-, einen Gurtoder einen Plattenförderer der insbesondere zum Fördern von Werkstückträgereinrichtungen geeignet ist.

Mit Hilfe von Fördereinrichtungen werden insbesondere in der Serienfertigung Werkstücke zwischen einzelnen Arbeitsplätzen, an denen beispielsweise eine Montage oder Bearbeitung der Werkstücke erfolgt, transportiert. Hierzu werden die Werkstücke auf Werkstückträgereinrichtungen angeordnet und die Werkstückträgereinrichtungen zusammen mit den Werkstücken durch entsprechende Fördereinrichtungen bewegt. Zum Bewegen der Werkstückträgereinrichtungen sind Friktionsförderer bekannt. Bei Friktionsförderern werden die Werkstückträgereinrichtungen nicht fest mit Fördereinrichtungen verbunden, sondern liegen beispielsweise auf Rollen lose auf. Die Bewegung der Werkstückträgereinrichtungen erfolgt durch auftretende Reibungskräfte zwischen den Rollen, Gurten oder Platten und Reibflächen der Werkstückträgereinrichtung. Friktionsförderer haben insbesondere den Vorteil, dass ein Stauen der Werkstückträgereinrichtungen möglich ist. Hierbei erfolgt während des Stauvorgangs ein Durchrutschen der entsprechenden Antriebseinrichtungen der Friktionsförderer. Ein aufwändiges und kompliziertes Ausklinken aus einer Fördereinrichtung, wie einer Kette, ist bei Friktionsförderern nicht erforderlich. Ferner haben Friktionsförderer den Vorteil, dass Kurven und insbesondere Abzweigungen auf einfache Weise realisiert werden können. Mit Hilfe von Abzweigungseinrichtungen, wie Weichen, können einzelne Werkstückträgereinrichtungen beispielsweise ausoder eingeschleust werden. Hierdurch weisen Friktionsförderer eine hohe Flexibilität auf. Ein derartiger Friktionsförderer ist in DE 40 36 214 beschrieben.

Sofern es sich bei den Werkstücken um schwere Werkstücke, insbesondere mit einem Gewicht von über 100 kg und/ oder um Werkstücke mit großen Abmessungen handelt, weisen Friktionsförderer den Nachteil auf, dass ungünstige Reibungsverhältnisse, insbesondere in den Kurven und Abzweigungsbereichen auftreten. Auch sind die auftretenden Reibungsverhältnisse bei sich aufstauenden Werkstückträgern nachteilig. Ein weiterer Nachteil von Friktionsförderern für große Werkstücke besteht darin, dass die Förderbahnen sehr breit ausgebildet werden müssen. Hierdurch erhöhen sich die Kosten für derartige Friktionsförderer.

Aus CH 669 167 ist ein Friktionsförderer bekannt, mit dem das Bewegen des Werkstückträgers über ein mit dem Werkstückträger verbundenes Bewegungselement über eine Reibfläche erfolgt. Ferner ist der Werkstückträger mit Rollen oder Rädern verbunden, die auf zwei schienenartig ausgebildeten Abstützelementen aufliegen. Ein weiterer Friktionsförderer ist aus GB 601 769 bekannt, wobei bei diesem die Räder des Werkstückträgers auf einem Gleis oder Schiene angeordnet sind.

Aufgabe der Erfindung ist es, einen Friktionsförderer für große und/ oder schwere Werkstücke zu schaffen, der insbesondere zum Bewegen entsprechender Werkstückträgereinrichtungen geeignet ist, wobei insbesondere enge Kurven mit dem Friktionsförderer realisierbar sind.

Die Aufgabe wird erfindungsgemäß durch einen Friktionsförderer gemäß Anspruch 1 gelöst.

Der erfindungsgemäße Friktionsförderer weist mehrere Antriebselemente zur Übertragung von Antriebskräften auf eine Reibfläche einer Werkstückträgereinrichtung auf. Bei einem Rollenförderer handelt es sich bei den Antriebselementen um zumindest teilweise angetriebene Rollen. Auf den Rollen liegt beispielsweise die Reibfläche des Bewegungselements der vorstehend beschriebenen Werkstückträgereinrichtung auf, so dass eine Bewegung der Werkstückträgereinrichtung auf Grund von Reibkräften erfolgt. Erfindungsgemäß weist der Friktionsförderer zusätzlich zu den Antriebselementen gesonderte Aufnahmeelemente zur Aufnahme zumindesteines Teils der Gewichtskraft des Werkstücks auf. Durch das Vorsehen gesonderter, d.h. von den Antriebselementen insbesondere räumlich getrennter Aufnahmeelemente ist der Transport von Werkstücken mit großem Gewicht möglich, da die durch das große Gewicht hervorgerufenen, negativen Reibungsverhältnisse zwischen der Reibfläche des Werkstückträgers und den Antriebselementen vermieden sind. Erfindungsgemäß wird zumindest ein Teil der Gewichtskraft ausschließlich von den Aufnahmeelementen aufgenommen, so dass der Kraftfluss für diesen Teil nicht über die Antriebselemente geleitet ist. Ferner ist es durch das zusätzliche Vorsehen von Aufnahmeelementen möglich, diese flexibel zu gestalten und die Lage der Aufnahmeelemente unabhängig von der Lage der Antriebselemente zu definieren. Eine entsprechende Fördereinrichtung kann somit auf einfache Weise an unterschiedliche Werkstückträgereinrichtungen, beispielsweise Werkstückträgereinrichtungen unterschiedlicher Breite, angepasst werden. Hierzu wäre lediglich eine andere Anordnung der Aufnahmeelemente erforderlich, wobei gegebenenfalls die Anordnung der Antriebselemente beibehalten werden kann.

Erfindungsgemäß weist die Antriebsebene einen insbesondere horizontalen Abstand zur Abstützebene auf. Hierdurch ist eine einfache Ausgestaltung von Abzweigungen möglich. Die Antriebsebene ist diejenige Ebene, in der die Kraftübertragung von den Antriebselementen auf die Reibfläche der Werkstückträgereinrichtung bzw. des Bewegungselements der Werkstückträgereinrichtung erfolgt. Die Abstützebene ist diejenige Ebene, in der die Abstützung zumindest eines Teils der Gewichtskraft des Werkstücks erfolgt. Bei Verwendung der vorstehend beschriebenen erfindungsgemäßen Werkstückträgereinrichtung entspricht die Abstützebene derjenigen Ebene, in der die Auflagebereiche bzw. Auflagepunkte der einzelnen Abstützelemente angeordnet sind. Beim Vorsehen von Abstützrollen ist die Abstützebene somit die Ebene, in der die Rollen abrollen.

Ferner weist der Friktionsförderer im Bereich der Abzweigung ein Abdeckelement auf, das insbesondere über den Antriebselementen angeordnet ist. Hierdurch kann die Verschmutzung der Antriebselemente verringert werden. Das Abdeckungselement weist vorzugsweise eine in Transportrichtung verlaufende Öffnung, wie einen Schlitz auf. Durch diesen Schlitz ragt bei Verwendung der vorstehend beschriebenen Werkstückträgereinrichtung das Verbindungselement zwischen dem Bewegungselement und dem Trägerelement.

Der erfindungsgemäße Friktionsförderer weist insbesondere in Kombination mit der nachstehend beschriebenen Werkstückträgereinrichtung erhebliche Vorteile auf.

Eine Werkstückträgereinrichtung dient zur losen Auflage auf einem Friktionsförderer, wie einem Rollen-, einem Gurt- oder einem Plattenförderer. Die Bewegung der Werkstückträgereinrichtung erfolgt somit mit Hilfe von Reibkräften, die von dem Friktionsförderer auf die Werkstückträgereinrichtung wirken. Hierzu weist die Werkstückträgereinrichtung ein Bewegungselement auf, das mit einer Reibfläche auf dem Friktionsförderer aufliegt. Mit dem insbesondere plattenförmig ausgebildeten Bewegungselement ist ein Trägerelement vorzugsweise fest verbunden. Das Trägerelement ist vorzugsweise ebenfalls plattenförmig ausgebildet und dient zur Aufnahme eines oder gegebenenfalls mehrerer Werkstücke. Erfindungsgemäß ist das Trägerelement mit Abstützelementen verbunden. Über die Abstützelemente erfolgt eine Aufnahme zumindest eines Teils des Gewichts des Werkstücks. Das Gewicht des Werkstücks wirkt somit erfindungsgemäß allenfalls zu einem Teil auf das Bewegungselement. Erfindungsgemäß wird ein Teil, vorzugsweise ein wesentlicher Teil des Werkstückgewichts von den Abstützelementen aufgenommen bzw. abgefangen. Vorzugsweise wird mehr als 50 %, insbesondere mehr als 70 % und besonders bevorzugt mehr als 90 % des Werkstückgewichts über das mindestens eine Abstützelement aufgenommen. Das mindestens eine mit dem Trägerelement verbundene Abstützelement überträgt die Gewichtskraft auf ein Aufnahmeelement, das beispielsweise Teil des Friktionsförderers sein kann, jedoch vorzugsweise mit den Antriebselementen des Friktionsförderers nicht in Verbindung steht. Das erfindungsgemäße Vorsehen zusätzlicher Abstützelemente, um zumindest einen Teil des Werkstückgewichts nicht auf das Bewegungselement zu übertragen, hat den Vorteil, dass die auftretenden Reibungsverhältnisse zwischen der Reibfläche des Bewegungselements und den Antriebselementen des Friktionsförderers nicht negativ beeinflusst werden.

Ferner ist es durch die Unterteilung der Werkstückträgereinrichtung in ein Bewegungselement und ein Trägerelement möglich, diese unterschiedlich groß auszugestalten. Hierdurch ist es möglich, ein relativ kleines Bewegungselement, das mit einem relativ großen Trägerelement zur Aufnahme von Werkstücken mit großen Abmessungen geeignet ist, zu verbinden. Insbesondere ist es möglich, ein modulares System zu schaffen, bei dem identische Bewegungselemente mit unterschiedlichen Trägerelementen, insbesondere Trägerelementen unterschiedlicher Außenabmessungen verbunden werden. Bei den vorzugsweise mehreren Abstützelementen handelt es sich vorzugsweise um Abstützelemente mit Abstützrollen. Über die Abstützrollen, die vorzugsweise an der Unterseite des Trägerelements angeordnet sind, kann zumindest ein Teil der Gewichtskraft des Werkstücks auf ein entsprechendes Aufnahmeelement übertragen werden. Bei dem Aufnahmeelement kann es sich um eine ebene, eine Rollbahn ausbildende Vorrichtung handeln, die unabhängig von den Antriebselementen des Friktionsförderers angeordnet sein kann. Die Anordnung und die geometrischen Abmessungen des Bewegungselements und des Trägerelements einer Werkstückträgereinrichtung können vorzugsweise derart gewählt werden, dass die gesamte Gewichtskraft des Werkstücks von den Abstützelementen aufgenommen wird. Dies erfolgt vorzugsweise über Abstützelemente, die Abstützrollen aufweisen, wobei die Abstützrollen in besonders bevorzugter Ausführungsform um Schwenkachsen schwenkbar sind. Hierdurch ist sichergestellt, dass keine ungewollte Reibung zwischen den Abstützelementen und der entsprechenden Auflagefläche auftritt und das Bewegen der Werkstückträgereinrichtung um Kurven ungehindert möglich ist.

Um sicherzustellen, dass die gesamte Gewichtskraft oder zumindest ein wesentlicher Teil der Gewichtskraft von den Abstützelementen aufgenommen wird oder nur ein definierter Teil der Gewichtskraft des Werkstücks auf das Bewegungselement übertragen wird, kann zwischen dem Trägerelement und dem Bewegungselement ein Unterbrechungselement angeordnet sein. Bei dem Unterbrechungselement handelt es sich beispielsweise um ein Dämpfungselement aus elastischem Material, eine Feder oder dergleichen. Beispielsweise kann durch eine Feder, die sodann auch als Andrückeinrichtung dient, gewährleistet werden, dass eine definierte Andrückkraft zwischen der Reibfläche des Bewegungselements und den Antriebselementen des Friktionsförderers gewährleistet ist. Auch bei Erhöhung des Gewichts des Werkstücks kann durch das Vorsehen eines Unterbrechungselements verhindert werden, dass die auftretenden Reibkräfte zwischen der Reibfläche und dem Friktionsförderer erhöht werden.

In einer besonders bevorzugten Ausführungsform weist eine Abstützebene einen insbesondere horizontalen Abstand zu einer Bewegungselementebene auf. Hierbei ist die Abstützebene diejenige Ebene, in der die Auflagebereiche bzw. Auflagepunkte des mindestens einen Abstützelements angeordnet sind. Gegebenenfalls können insbesondere, wenn mehrere Abstützelemente vorgesehen sind, diese beispielsweise in Gruppen in unterschiedlichen Abstützebenen vorgesehen sein. Bei der Bewegungselementebene handelt es sich um die Ebene, in der das Bewegungselement, insbesondere die Reibfläche des Bewegungselements angeordnet ist. Durch eine derartige horizontale Trennung ist insbesondere das Vorsehen eines Verbindungselements zwischen dem Bewegungselement und dem Trägerelement möglich. Hierbei kann das Verbindungselement stegförmig oder säulenförmig ausgebildet sein. Dies hat wiederum den Vorteil, dass im Bereich von Abzweigungen des Friktionsförderers, d.h. in einem Bereich, in dem die Bahn der Abstützelemente, die Bahn des Bewegungselements schneidet, nur ein relativ schmaler Schlitz zum Hindurchführen des Verbindungselements vorgesehen sein muss. Der Schlitz kann bei entsprechender Dimensionierung der Abstützelemente, wie der Abstützrollen ohne Weiteres überbrückt bzw. überrollt werden. Auf Grund der Anordnung der Abstützebene in einem Abstand zu der Bewegungselementebene ist es auf einfache Weise möglich, Abzweigungen zu realisieren.

Vorzugsweise ist das Verbindungselement derart ausgebildet, dass zwischen dem Bewegungselement und dem Trägerelement eine gelenkige Verbindung realisiert ist. Hierdurch können Unebenheiten der Laufbahnen der Abstützelemente ausgeglichen werden. Vorzugsweise ist das vorstehend beschriebene Unterbrechungselement in dem Verbindungselement integriert. Bei einer bevorzugten Ausführungsform der erfindungsgemäßen Werkstückträgereinrichtung ist das Bewegungselement mittig zum Trägerelement angeordnet. Insbesondere ist das Bewegungselement symmetrisch zum Schwerpunkt des Trägerelements angeordnet. Besonders bevorzugt ist es, dass in Transportrichtung der Werkstückträgereinrichtung das Bewegungselement auf einer Symmetrielinie des Trägerelements angeordnet ist. In Transportrichtung auf beiden Seiten des Trägerelements sind sodann vorzugsweise symmetrisch zum Bewegungselement Abstützelemente angeordnet.

Bei einer weiteren Ausführungsform der erfindungsgemäßen Werkstückträgereinrichtung ist das Bewegungselement außermittig zum Trägerelement, insbesondere auf einer Seite des Trägerelements angeordnet. In Transportrichtung ist bei dieser Ausführungsform insbesondere auf einer Seite des Trägerelements das Bewegungselement und auf der anderen Seite das mindestens eine Abstützelement vorgesehen. Bei dieser Ausführungsform wird ein Teil, bei symmetrischer Auflage des Werkstückträgers 50 % der Gewichtskraft des Werkstücks, von dem Bewegungselement aufgenommen. Wenngleich diese Ausführungsform somit hinsichtlich des aufzunehmenden Gewichts des Werkstücks beschränkt ist, weist sie dennoch den Vorteil auf, dass insbesondere im mittleren Bereich des Trägerelements ein Durchbruch vorgesehen sein kann. Hierdurch ist ein Zugang zu dem Werkstück von unten durch den Durchbruch hindurch zur Montage oder Bearbeitung möglich.

Nachfolgend wird die Erfindung anhand bevorzugter Ausführungsformen unter Bezugnahme auf die anliegenden Zeichnungen näher erläutert.

Es zeigen:
- Figur 1: eine schematische Unteransicht einer ersten bevorzugten Ausführungsform der Werkstückträgereinrichtung,
- Figur 2: eine schematische Seitenansicht einer ersten bevorzugten Ausführungsform der Werkstückträgereinrichtung in Richtung des Pfeils II in Figur 1,
- Figur 3: eine schematische Unteransicht einer zweiten bevorzugten Ausführungsform der Werkstückträgereinrichtung,
- Figur 4: eine schematische Seitenansicht einer zweiten bevorzugten Ausführungsform der Werkstückträgereinrichtung in Richtung des Pfeils II in Figur 3,
- Figur 5: eine schematische Unteransicht einer dritten bevorzugten Ausführungsform der Werkstückträgereinrichtung,
- Figur 6: eine schematische Seitenansicht einer dritten bevorzugten Ausführungsform der Werkstückträgereinrichtung in Richtung des Pfeils II in Figur 5,
- Figur 7: eine schematische Unteransicht einer vierten bevorzugten Ausführungsform der Werkstückträgereinrichtung,
- Figur 8: eine schematische Seitenansicht einer vierten bevorzugten Ausführungsform der Werkstückträgereinrichtung in Richtung des Pfeils II in Figur 7,
- Figur 9: eine schematische vergrößerte Ansicht einer Ausführungsform des Verbindungselements,
- Figur 10: eine schematische Schnittansicht eines Friktionsförderers, der insbesondere zum Bewegen von Werkstückträgereinrichtungen nach Figur 1 oder 2 geeignet ist,
- Figur 11: eine schematische Draufsicht des in Figur 10 dargestellten Friktionsförderers mit Abzweigung,
- Figur 12: eine schematische Draufsicht des in Figur 11 dargestellten Friktionsförderers mit einer in der Abzweigung angeordneten Werkstückträgereinrichtung,
- Figur 13: eine schematische Schnittansicht einer weiteren Ausführungsform eines Friktionsförderers, der insbesondere zum Bewegen von Werkstückträgereinrichtungen nach Figur 1 oder 2 geeignet ist, und
- Figur 14: eine schematische Draufsicht des in Figur 13 dargestellten Friktionsförderers.

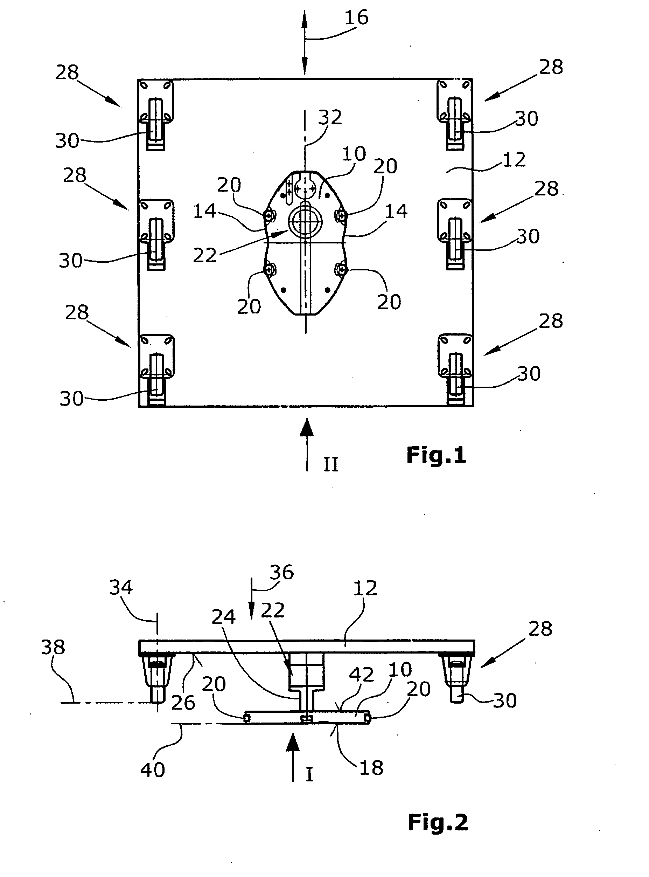

Die in den Figuren 1 und 2 dargestellte, erste Ausführungsform der erfindungsgemäßen Werkstückträgereinrichtung weist ein Bewegungselement 10 sowie ein Trägerelement 12 auf. Das Bewegungselement 10 weist eine im Wesentlichen ovale Außenkontur auf, die an zwei einander gegenüberliegenden Seiten eine bogenförmige Einbuchtung 14 aufweist. Die Einbuchtungen 14 sind bezogen auf die Transportrichtung 16 seitlich angeordnet. Hierdurch ist das Bewegen des Bewegungselements um Kurven oder Abzweigungen erleichtert. Das Bewegungselement 10 weist eine ebene, als Reibfläche ausgebildete Unterseite 18 auf. An der Reibfläche 18 liegen bei Verwenden der Werkstückträgereinrichtung in Verbindung mit einem Rollenförderer die Antriebsrollen an. An den Außenseiten des Bewegungselements 10 können insbesondere zur Reibungsverringerung in Kurven und dergleichen Rollen 20 oder ähnliche Gleitelemente vorgesehen sein.

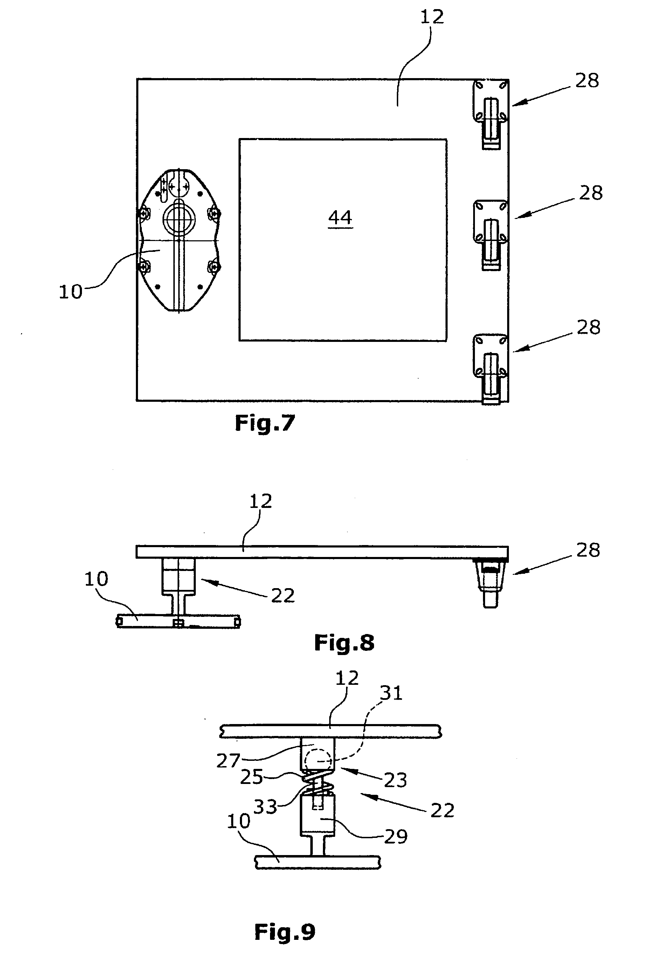

Das Bewegungselement 10 ist über ein Verbindungselement 22 mit dem Trägerelement 12 verbunden. Das Verbindungselement 22 ist vorzugsweise stegförmig ausgebildet und weist an dem in Richtung des Bewegungselements weisenden Ende eine Verjüngung auf, so dass das Verbindungselement 22 in diesem Bereich als kreiszylindrischer Steg 24 ausgebildet ist. In dem oberhalb des zylindrischen Stegs 24 ausgebildeten Teil des Verbindungselements 22 kann ein Gelenk 23 (Figur 9) zur gelenkigen Verbindung des Bewegungselements 10 mit dem Trägerelement 12 vorgesehen sein. Ferner kann in diesem Bereich ein nicht dargestelltes Unterbrechungselement, wie eine Dämpfungsscheibe oder dergleichen, vorgesehen sein. Ferner kann in dem Verbindungselement 22 eine als Andrückeinrichtung 25 (Figur 9) dienende Feder oder dergleichen vorgesehen sein. Durch eine derartige Andrückeinrichtung wird die Reibkraft zwischen der Reibfläche 18 und entsprechenden Antriebselementen des Friktionsförderers definiert.

An einer Unterseite 26 des insbesondere plattenförmig ausgebildeten Trägerelements 12 sind im dargestellten Ausführungsbeispiel sechs Abstützelemente 28, die jeweils eine Abstützrolle 30 aufweisen, angeordnet. Die sechs Abstützelemente 28 sind symmetrisch zu einer Mittellinie 32 des Trägerelements 12 angeordnet. Im dargestellten Ausführungsbeispiel ist auch das Verbindungselement 22 symmetrisch zur Mittellinie 32 angeordnet. Die einzelnen Abstützrollen 30 sind jeweils um eine Schwenkachse 34 schwenkbar, so dass die erfindungsgemäße Werkstückträgereinrichtung auf einfache Weise um Kurven geführt werden kann.

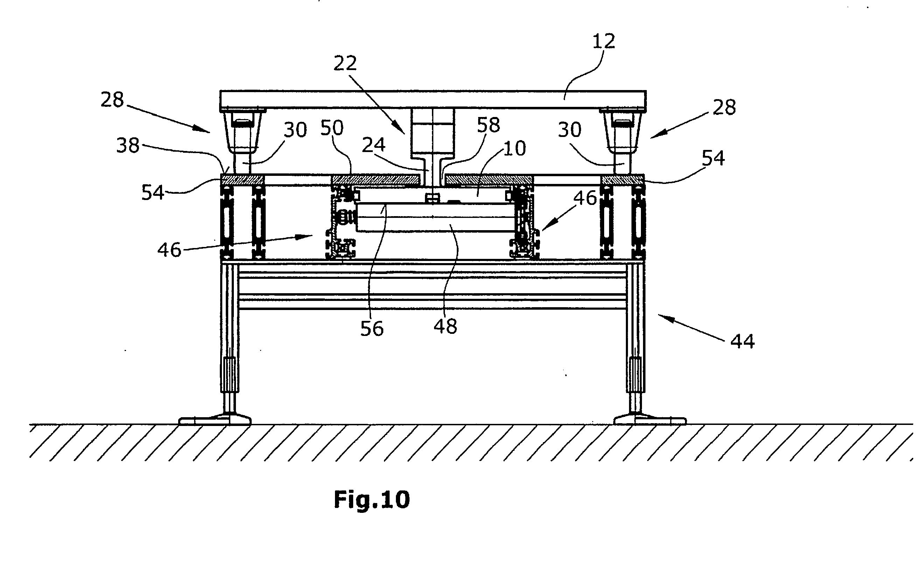

Senkrecht zu einer in Richtung eines Pfeils 36 wirkenden Gewichtskraft, die im dargestellten Ausführungsbeispiel der Abstützeinrichtung entspricht, verläuft eine Abstützebene 38. Die Abstützebene 38 ist diejenige Ebene, in der im dargestellten Ausführungsbeispiel sämtliche sechs Auflagepunkte bzw. Auflagebereiche der Rollen 30 angeordnet sind. In einem horizontalen Abstand zu der Abstützebene 38 ist die Bewegungselementebene 40, in der insbesondere auch die Reibfläche 18 angeordnet ist, vorgesehen. Auch eine Oberseite 42 des Bewegungselements 10 weist vorzugsweise einen Abstand zu der Abstützebene 40 auf. Dies ist, wie nachstehend erläutert, zweckmäßig, um ein Abdeckelement 50 (Figur 10) vorzusehen. In einem Schlitz des Abdeckelements 50 ist der stegförmige Teil 24 des Verbindungselements 22 angeordnet.

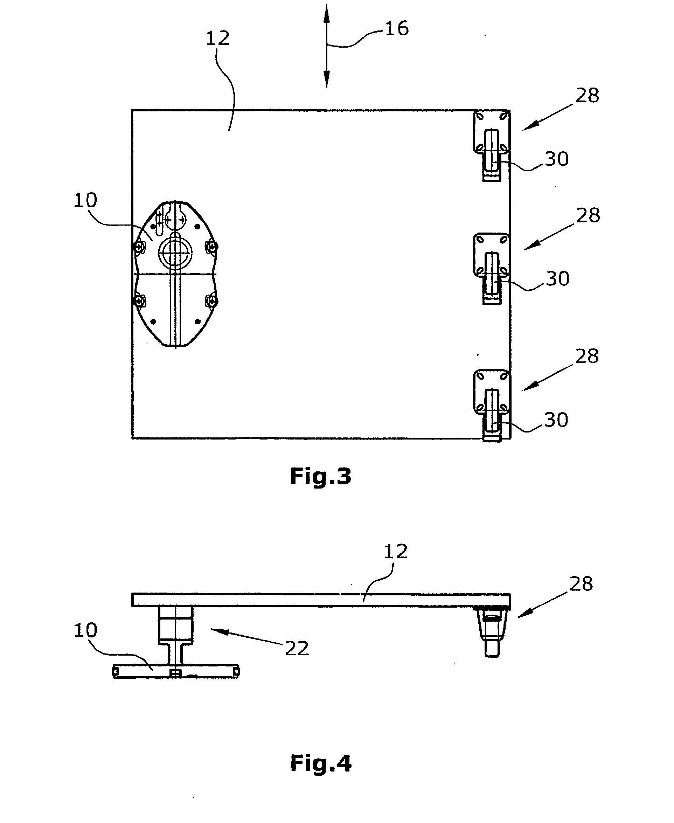

Bei den nachfolgenden Ausführungsbeispielen, die in den Figuren 3 bis 8 dargestellt sind, sind ähnliche und identische Bauteile jeweils mit denselben Bezugszeichen gekennzeichnet.

Die zweite Ausführungsform (Figuren 3 und 4) unterscheidet sich im Wesentlichen dadurch von der ersten Ausführungsform, dass in Transportrichtung 16 gesehen das Bewegungselement 10 an einer Außenseite des Trägerelements 12 und die Abstützelemente 28 auf der gegenüberliegenden Seite des Trägerelements 12 angeordnet sind. Hierbei handelt es sich um einen deutlich einfacheren Aufbau, wobei ein Teil der Gewichtskraft des Werkstücks stets von dem Bewegungselement 10 aufgenommen werden muss. Vorteilhaft ist diese Ausgestaltung der Werkstückträgereinrichtung insbesondere bei Förderern, in denen eine bestimmte Art von Kurven, Rechts- oder Linkskurven, häufiger vorkommt. Hierbei können die Fördereinrichtungen derart aufgebaut werden, dass die Bahn, auf der die Abstützrollen 30 laufen, häufiger an der Innenseite der Kurve angeordnet ist. Hierdurch ist die Anzahl der Kreuzungen zwischen der Bahn, auf der die Abstützrollen laufen, und der Bahn des Bewegungselements verringert.

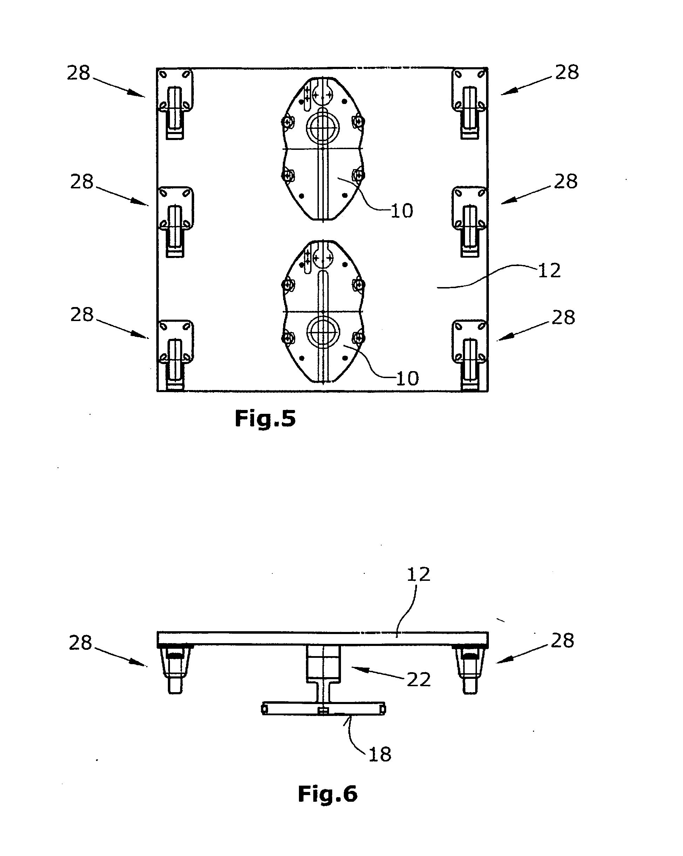

Die in den Figuren 5 und 6 dargestellte Ausführungsform entspricht der in den Figuren 1 und 2 dargestellten Ausführungsform mit dem einzigen Unterschied, dass in Bewegungsrichtung 16 zwei Bewegungselemente 10 hintereinander angeordnet sind. Da hierdurch die Reibfläche 18 vergrößert ist, können größere Reibkräfte übertragen werden.

Das in den Figuren 7 und 8 dargestellte Ausführungsbeispiel einer Werkstückträgereinrichtung entspricht dem in den Figuren 3 und 4 dargestellten Ausführungsbeispiel, wobei das Trägerelement 12 zusätzlich eine Öffnung 44 aufweist, so dass ein auf dem Trägerelement 12 angeordnetes Werkstück auch von unten zugänglich ist.

Ein wesentliches Merkmal sämtlicher Ausführungsbeispiele der erfindungsgemäßen Werkstückträgereinrichtung besteht darin, dass das Bewegungselement 10 in einem insbesondere horizontalen Abstand zu dem Trägerelement 12 angeordnet ist. Im Bereich des Bewegungselements weist die Werkstückträgereinrichtung somit vorzugsweise einen doppel-T-förmigen Querschnitt auf.

In den vorstehend beschriebenen Ausführungsbeispielen ist das Verbindungselement 22 vorzugsweise wie anhand Figur 9 dargestellt ausgebildet. Das Verbindungselement 22 ist im oberen Bereich zweiteilig ausgebildet und weist zwei zylindrische Elemente 27, 29 auf. Das obere zylindrische Element 27 ist mit dem Trägerelement 12 fest verbunden und weist einen insbesondere kugelförmigen Hohlraum auf, in dem eine Kugel 31 des Kugelgelenks 23 angeordnet ist. Mit der Kugel 31 ist ein Stab 33 verbunden, der in eine zylindrische Öffnung des unteren Elements 29 ragt und in dieser in Längsrichtung verschiebbar ist. Ferner ist zwischen den beiden Elementen 27, 29 die Feder 25 vorgesehen.

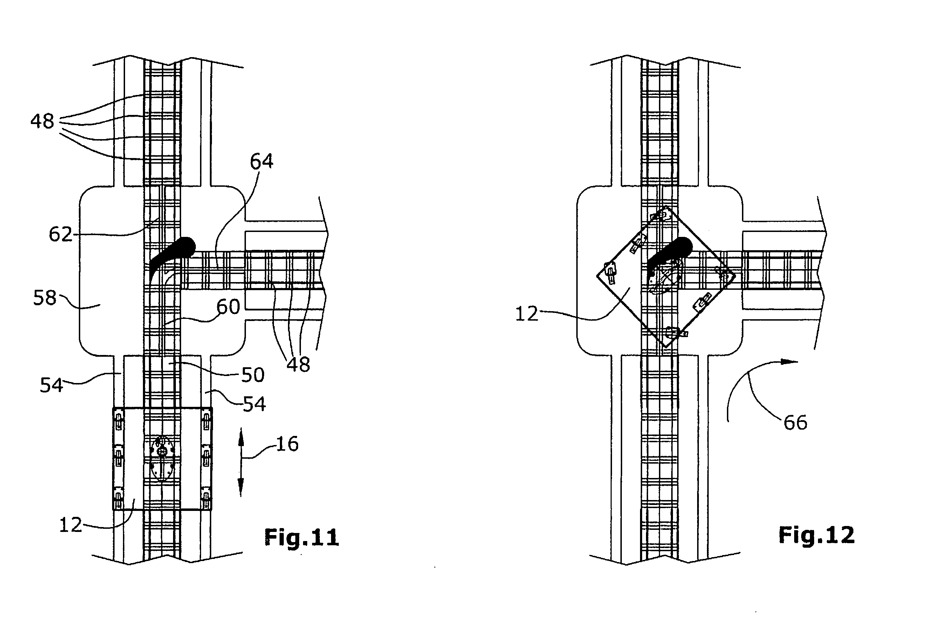

Anhand der Figuren 10 bis 12 wird im Folgenden ein erfindungsgemäßer Rollenförderer beschrieben, der zur Bewegung der in den Figuren 1 und 2 dargestellten Werkstückträgereinrichtung geeignet ist. Auf einem insbesondere höhenverstellbaren Gestell 44 sind rahmenförmige Trägerelemente 46 angeordnet. Die Trägerelemente 46 tragen mehrere in Transportrichtung 16 (Figur 11) hintereinander angeordnete, als Antriebselemente 48 dienende Rollen. Die Oberfläche der Rollen 48 liegt an der Reibfläche 18 des Bewegungselements 10 an. Auf Grund der auftretenden Reibung zwischen den Antriebsrollen 48 und der Reibfläche 18 erfolgt ein Bewegen des Bewegungselements 10 und damit des über das Verbindungselement 22 mit dem Bewegungselement 10 verbundenen Trägerelements 12 in Bewegungsrichtung 16. Die Rollen 48 werden beispielsweise über Zahnräder oder eine andere nicht dargestellte Antriebseinrichtung angetrieben. Oberhalb der Antriebsrollen 48 ist ein Abdeckelement 50 vorgesehen.

Durch das Abdeckelement 50 ist ein im Querschnitt im Wesentlichen rechteckiger Raum ausgebildet, in dem das Bewegungselement 10 angeordnet ist. Das Bewegungselement 10 ist somit zwischen den Antriebselementen 48 und dem Abdeckelement 50 angeordnet. Das Abdeckelement 50 dient zur Verringerung der Verschmutzung der Antriebselemente 48.

Das Abdeckelement 50 weist einen in Transportrichtung 16 verlaufenden Schlitz 52 auf, in dem der zylindrische Teil 24 des Verbindungselements 22 angeordnet ist.

Im dargestellten Ausführungsbeispiel ist auf derselben Höhe wie das Abdeckelement 50 auf beiden Seiten der Antriebselemente 48 jeweils ein Abstützelement 54 angeordnet. Auf dem ebenen, als Rollbahn ausgebildeten Abstützelement 54 erfolgt ein Abrollen der Abstützrollen 30.

Um die anhand der Figuren 1 und 2 beschriebene Werkstückträgereinrichtung mit dem in den Figuren 10 bis 12 dargestellten Friktionsförderer bewegen zu können, ist wiederum ein horizontaler Abstand zwischen einer Antriebsebene und einer Abstützebene vorgesehen. Die Abstützebene 38 entspricht der Oberseite der Aufnahmeelemente 54. Die Antriebsebene entspricht der Oberseite 56 der Antriebselemente 48 und fällt mit der Reibebene 18 des Bewegungselements 10 zusammen.

Im Bereich einer Abzweigung, wie sie in den Figuren 11 und 12 dargestellt ist, ist es erforderlich, dass die bahnförmigen Aufnahmeelemente in eine vergrößerte Fläche übergehen, bei der es sich im dargestellten Ausführungsbeispiel um eine im Wesentlichen quadratische Fläche 58 handelt. Da die an der Unterseite des Trägerelements 12 vorgesehenen Abstützelemente 28 Lenkrollen aufweisen, die um die Schwenkachse 34 frei drehbar sind, passt sich die Stellung der Rollen der Bewegung des Trägerelements 12 automatisch an (Figur 12). Da in dem bevorzugten Ausführungsbeispiel die Oberseite des Abdeckelements 50 der Oberseite der Aufnahmeelemente 54 entspricht, ist es möglich, dass das Abdeckelements 50 gegebenenfalls stufenfrei in die Ebene 58 übergeht. Der zur Hindurchführung des Stegs 24 dienende Schlitz 52 ist in der Ebene 58 zunächst als Schlitz 60 ausgebildet, der entweder gerade als Schlitz 62 weitergeführt ist oder in eine Kurve 64 übergeht.

Wie sodann insbesondere anhand Figur 12 ersichtlich ist, müssen die äußeren Rollen 30 bei einer Bewegung des Trägerelements 12 um die Kurve herum in Richtung des Pfeils 66 über den Schlitz 62 rollen. Dies ist problemlos möglich, da der Durchmesser der Rollen deutlich größer ist als die Schlitzbreite.

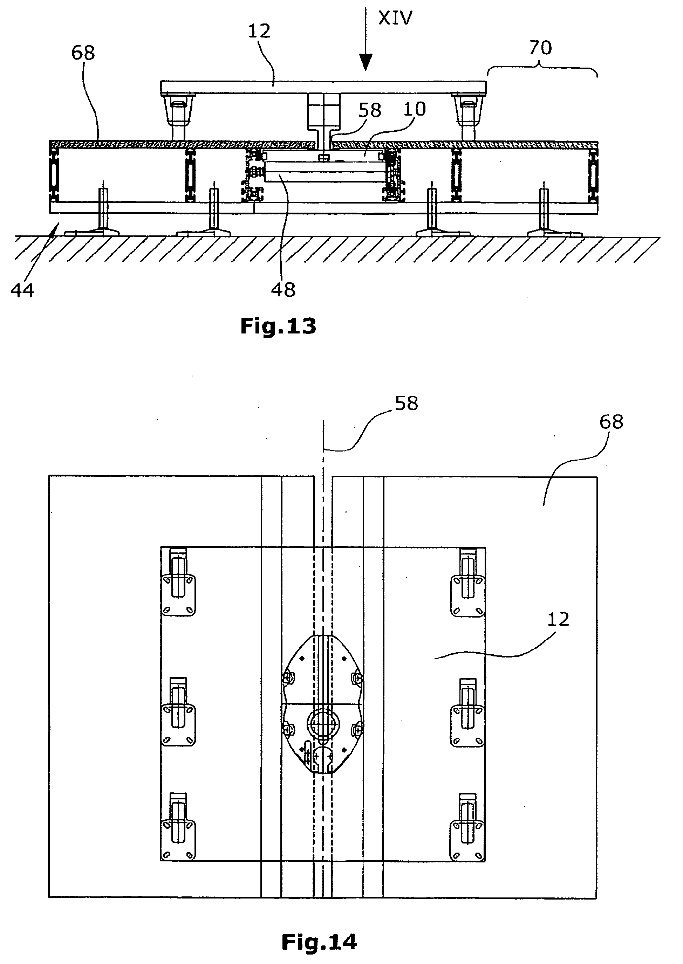

In den Figuren 13 und 14 ist eine weitere Ausführungsform des Friktionsförderers dargestellt. Dieser ist ähnlich wie der anhand der Figuren 10 bis 12 beschriebene Friktionsförderer aufgebaut. Ähnlich oder identische Bauteile sind mit denselben Bezugszeichen gekennzeichnet.

Der wesentliche Unterschied zwischen dem in den Figuren 10 bis 12 und dem in den Figuren 13 und 14 dargestellten Friktionsförderer besteht darin, dass anstelle eines im Wesentlichen nur die Antriebselemente 48 abdeckenden Abdeckelements 50 (Figur 10) ein durchgehendes Abdeck- und Abstützelement 68 vorgesehen ist. Das Element 68 dient somit sowohl zum Abdecken der Antriebselemente 48 und bildet ferner auch die Abstützelemente entsprechend den Abstützelementen 54 in Figur 10 aus. Es handelt sich bei dem Abdeck- und Abstützelement 68 um eine durchgehende Platte mit einem Schlitz 58. Der Vorteil eines durchgehenden Elements 68 besteht darin, dass die Kräfte besser in das Gestell 44 eingeleitet werden können. Ferner ist es möglich, dass das Element 68 seitlich über das Trägerelement 12 ragt, so dass in einem Bereich 70 eine Standfläche für Personen gebildet ist.

## Patentansprüche

1. Friktionsförderer mit
mehreren Antriebselementen (48) zur Übertragung von Antriebskräften auf eine Reibfläche (18) einer Werkstückträgereinrichtung,
mindestens einem gesonderten, von den Antriebselementen (48) unabhängigen Aufnahmeelement (54) zur Aufnahme zumindest eines Teils der Gewichtskraft des Werkstücks,
wobei eine Antriebsebene (40), in der die Kraftübertragung auf die Reibfläche (18) stattfindet, und einer Abstützebene (38) der Aufnahmeelemente (54), in der das Abstützen der Gewichtskraft des Werkstücks erfolgt, in einem Abstand zueinander angeordnet sind,
**gekennzeichnet durch**
eine Abzweigung, und
ein im Bereich der Abzweigung vorgesehenes Abdeck- und Aufnahmeelement (68) zur Abdeckung der Antriebselemente (48) sowie zur Aufnahme zumindest eines Teils der Gewichtskraft des Werkstücks.

2. Friktionsförderer nach Anspruch 1, **gekennzeichnet durch** ein insbesondere über den Antriebselementen (48) angeordnetes Abdeckelement (50).

3. Friktionsförderer nach Anspruch 1 oder 2, **dadurch gekennzeichnet, dass** das Abdeckelement (50) bzw. Abdeck- und Aufnahmeelement (68) eine sich in Transportrichtung (16) erstreckende Öffnung (52) zum Hindurchführen eines Verbindungselements (22) der Werkstückträgereinrichtung aufweist.

4. Friktionsförderer nach einem der Ansprüche 1 bis 3, **dadurch gekennzeichnet, dass** das Abdeck- und Aufnahmeelement (68) begehbar ist.

5. Friktionsförderer nach einem der Ansprüche 1 bis 4, **dadurch gekennzeichnet, dass** die Reibfläche (18) an einem Bewegungselement (10) des Werkstückträgers vorgesehen ist, mit dem Bewegungselement (10) ein Trägerelement (12) zur Aufnahme eines Werkstücks verbunden ist, und mit dem Trägerelement (12) mindestens ein vom Bewegungselement (10) unabhängiges Abstützelement (28) zur Aufnahme zumindest eines Teils des Werkstückgewichts verbunden ist.

6. Friktionsförderer nach Anspruch 5, **dadurch gekennzeichnet, dass** das Abstützelement (28) Abstützrollen (30) aufweist.

7. Friktionsförderer nach Anspruch 5 oder 6, **dadurch gekennzeichnet, dass** das Abstützelement (28), insbesondere die Abstützrollen (30) an einer Unterseite (26) des Trägerelements (12) angeordnet sind.

8. Friktionsförderer nach einem der Ansprüche 5 bis 7, **dadurch gekennzeichnet, dass** die Abstützelemente (28) derart angeordnet sind, dass das gesamte Werkstückgewicht von den Abstützelementen (28) aufgenommen ist.

9. Friktionsförderer nach einem der Ansprüche 5 bis 8, **dadurch gekennzeichnet, dass** das Abstützelement (28) insbesondere um eine in Abstützrichtung (36) verlaufende Schwenkachse (34) schwenkbar ist.

10. Friktionsförderer nach einem der Ansprüche 5 bis 9, **gekennzeichnet durch** ein zwischen dem Trägerelement (12) und dem Bewegungselement (10) angeordnetes Unterbrechungselement zur Reduzierung, vorzugsweise zur Unterbindung der auf das Bewegungselement (10) übertragenen Gewichtskraft des Werkstücks.

11. Friktionsförderer nach einem der Ansprüche 5 bis 10, **dadurch gekennzeichnet, dass** das Bewegungselement (10) mit einer Andrückeinrichtung zur Gewährleistung einer Andrückkraft zwischen der Reibfläche (18) und dem Friktionsförderer verbunden ist.

12. Friktionsförderer nach einem der Ansprüche 5 bis 11, **dadurch gekennzeichnet, dass** eine Abstützebene (38), in der die Auflagebereiche der Abstützelemente (28) angeordnet sind, einen Abstand zu einer Bewegungselementebene (40), in der das Bewegungselement (10) angeordnet ist, aufweist.

13. Friktionsförderer nach einem der Ansprüche 5 bis 12, **dadurch gekennzeichnet, dass** das Bewegungselement (10) über ein stegförmiges Verbindungselement (22) mit dem Trägerelement (12) verbunden ist.

14. Friktionsförderer nach Anspruch 13, **dadurch gekennzeichnet, dass** das Unterbrechungselement in das Verbindungselement (22) integriert ist.

15. Friktionsförderer nach Anspruch 13 oder 14, **dadurch gekennzeichnet, dass** das Verbindungselement (22) gelenkig mit dem Trägerelement (12) und/ oder dem Bewegungselement (10) verbunden ist.

16. Friktionsförderer nach einem der Ansprüche 5 bis 15, **dadurch gekennzeichnet, dass** das Trägerelement (12) einen Durchbruch (44) zur Werkstückbearbeitung von unten aufweist.

## Claims

1. A friction conveyor comprising
a plurality of drive elements (48) for transmitting drive forces to a friction surface (18) of a workpiece carrier system,
at least a separate absorption element (54) for absorbing at least a part of the weight force of the workpiece, the absorption element being independent of the drive elements (48),
wherein a drive plane (40), in which the force transmission to the friction surface (18) occurs, and a support plane (38) of the absorption elements (54), in which the weight force of the workpiece is supported, are spaced from each other,
**characterized by**
a branch; and
a cover and absorption element (68) provided in the branch area, serving to cover the drive elements (48) and to absorb at least a part of the weight force of the workpiece.

2. The friction conveyor of claim 1, **characterized in** by a cover element (50) especially arranged above the drive elements (48).

3. The friction conveyor of claim 1 or 2, **characterized in that** the cover element (50) or the cover and absorption element (68) has an opening (52) extending in the direction of transport (16) and being intended for the passage of a connection element (22) of the workpiece carrier system.

4. The friction conveyor of one of claims 1 to 3, **characterized in that** the cover and absorption element (68) is walkable.

5. The friction conveyor of one of claims 1 to 4, **characterized in that** the friction surface (18) is provided on a displacement element (10) of the workpiece carrier, that a carrier element (12) for receiving a workpiece is connected with the displacement element (10), and that at least one support element (28) for absorbing at least a part of the weight of the workpiece is connected with the carrier element (12) and is independent of the displacement element (10).

6. The friction conveyor of claim 5, **characterized in that** the support element (28) comprises support rollers (30).

7. The friction conveyor of claim 5 or 6, **characterized in that** said support element (28), especially the support rollers (30), are provided on a bottom face (26) of the carrier element (12).

8. The friction conveyor of one of claims 5 to 7, **characterized in that** the support elements (28) are arranged such that the entire weight of the workpiece is absorbed by the support elements (28).

9. The friction conveyor of one of claims 5 to 8, **characterized in that** the support element (28) is pivotable especially about a pivot axis (34) extending in the direction of support (36).

10. The friction conveyor of one of claims 5 to 9, **characterized by** an interruption element arranged between the carrier element (12) and the displacement element (10) for reducing, preferably for eliminating, the weight force of the workpiece transmitted on the displacement element (10).

11. The friction conveyor of one of claims 5 to 10, **characterized in that** the displacement element (10) is connected with a press-on means for ensuring a pressure force between the friction surface (18) and the friction conveyor.

12. The friction conveyor of one of claims 5 to 11, **characterized in that** a support plane (38), in which the support portions of the support elements (28) are arranged, is spaced from a displacement element plane (40) in which the displacement element (10) is arranged.

13. The friction conveyor of one of claims 5 to 12, **characterized in that** the displacement element (10) is connected with the carrier element (12) through a web-shaped connection element (22).

14. The friction conveyor of claim 13, **characterized in that** the interruption element is integrated with the connection element (22).

15. The friction conveyor of claim 13 or 14, **characterized in that** the connection element (22) is hinged to carrier element (12) and/or the displacement element (10).

16. The friction conveyor of one of claims 5 to 15, **characterized in that** the carrier element (12) has an opening (44) for treating the workpiece from below.

## Revendications

1. Convoyeur à friction comprenant
plusieurs éléments d'entrainement (48) pour transmettre des forces d'entrainement à une surface de friction (18) d'un moyen porte-pièces,
au moins un élément absorbeur (54) séparé, indépendant desdits éléments d'entrainement (48), pour absorber au moins une partie de la force de pesanteur de la pièce,
un plan d'entrainement (40), dans lequel la force est transmise à ladite surface de friction (18), et un plan de support (38) des éléments absorbeurs (54), dans lequel ladite force de pesanteur de ladite pièce est supportée, étant arrangé éloigné l'un de l'autre,
**caractérisé par**
une bifurcation; et
un élément de recouvrement et d'absorption (68) prévu dans la région de la bifurcation, ledit élément servant à recouvrir lesdits éléments d'entrainement (48) et à absorber au moins une partie de la force de pesanteur de ladite pièce.

2. Convoyeur à friction selon la revendication 1, **caractérisé par** un élément de recouvrement (50) arrangé en particulier dessus les éléments d'entrainement (48).

3. Convoyeur à friction selon les revendications 1 ou 2, **caractérisé en ce que** ledit élément de recouvrement (50) ou ledit élément de recouvrement et d'absorption (68) comprend une ouverture (52) s'étendant dans la direction de transport (16) pour le passage d'un élément de raccord (22) dudit moyen porte-pièces.

4. Convoyeur à friction selon l'une des revendications 1 à 3, **caractérisé en ce que** ledit élément de recouvrement et d'absorption (68) est accessible.

5. Convoyeur à friction selon l'une des revendications 1 à 4, **caractérisé en ce que** la surface de friction (18) est prévue à un élément de déplacement (10) dudit porte-pièces, qu'un élément porteur (12) est connecté audit élément de déplacement (10) pour recevoir une pièce, et qu'au moins un élément de support (28) est connecté audit élément porteur (12) pour absorber au moins une partie de la pesanteur de la pièce, ledit élément de support étant indépendant dudit élément de déplacement (10).

6. Convoyeur à friction selon la revendication 5, **caractérisé en ce que** ledit élément de support (28) comprend des rouleaux de support (30).

7. Convoyeur à friction, selon les revendications 5 ou 6, **caractérisé en ce que** ledit élément de support (28), à savoir les rouleaux de support (30), sont arrangés à une face basse (26) dudit élément porteur (12).

8. Convoyeur à friction selon l'une des revendications 5 à 7, **caractérisé en ce que** lesdits éléments de support (28) sont arrangés de sorte que tout le poids de la pièce est absorbée par les éléments de support (28).

9. Convoyeur à friction selon l'une des revendications 5 à 8, **caractérisé en ce que** ledit élément de support (28) est pivotable en particulier autour d'un axe de pivotement (34) s'étendant dans la direction de support (36).

10. Convoyeur à friction selon l'une des revendications 5 à 9, **caractérisé par** un élément d'interruption disposé entre ledit élément porteur (12) et ledit élément de déplacement (10), l'élément servant à réduire, de préférence à éliminer, l'effet de la force de pesanteur de ladite pièce transmise sur ledit élément de déplacement (10).

11. Convoyeur à friction selon l'une des revendications 5 à 10, **caractérisé en ce que** ledit élément de déplacement (10) est lié à un moyen de pression pour garantir une force de pression entre ladite surface de friction (18) et ledit convoyeur à friction.

12. Convoyeur à friction selon l'une des revendications 5 à 11, **caractérisé en ce qu'**un plan de support (38), dans lequel sont arrangés les parties d'appui des éléments de support (28), est écarté d'un plan d'élément de déplacement (40), dans lequel est arrangé ledit élément de déplacement (10).

13. Convoyeur à friction selon l'une des revendications 5 à 12, **caractérisé en ce que** ledit élément de déplacement (10) est lié audit élément porteur (12) par un élément de liaison (22) en forme d'entretoise.

14. Convoyeur à friction selon la revendication 13, **caractérisé en ce que** ledit élément d'interruption est intégré dans ledit élément de liaison (22).

15. Convoyeur à friction selon les revendications 13 ou 14, **caractérisé en ce que** ledit élément de liaison (22) est lié de manière articulée audit élément porteur (12) et/ou audit élément de déplacement (10).

16. Convoyeur à friction selon l'une des revendications 5 à 15, **caractérisé en ce que** ledit élément porteur (12) comprend une ouverture (44) pour permettre l'usinage de la pièce de dessous.
